# EUROPÄISCHE PATENTANMELDUNG

(11) **EP 1 431 017 A1**
(43) Veröffentlichungstag der Anmeldung: **23.06.2004**
(21) Anmeldenummer: 03028921.9
(22) Anmeldetag: 17.12.2003
(51) Int. Cl.: B29B 17/00, B02C 7/02, B02C 7/14, B02C 7/06

(54) **Verdichter mit verstellbarer Hülse**

(30) Priorität: 18.12.2002 DE 10259102
(71) Anmelder: Der Grüne Punkt - Duales System Deutschland AG, 51145 Köln (DE)
(72) Erfinder: Wissing, Johannes, 48703 Stadtlohn (DE); Wissing, Heinrich, 48691 Vreden (DE); Schnettler, Heinz Rainer, 53332 Bornheim (DE)
(74) Vertreter: Tönhardt, Marion, Dr.

(57) **Zusammenfassung**

Ein Verdichter zur Aufbereitung von thermoplastischen Kunststoffen zwischen zwei etwa scheibenförmigen Arbeitsflächen, von denen wenigstens eine drehbar ist, mit einer Welle, die drehangetrieben ist und mit der drehbaren Arbeitsfläche verbunden ist, und mit einer die Welle umgebenden Hülse, welche gemeinsam mit der Welle axial verfahrbar ist, wobei die Hülse ein Außengewinde aufweist, ist dadurch gekennzeichnet,
dass die Hülse (6) drehfest gelagert ist, und dass die Hülse (6) von einem äußeren, drehbar gelagerten Bauteil (7) umgeben ist, welches mittels eines Innengewindes mit dem Außengewinde der Hülse (6) zusammenwirkt, wobei das äußere Bauteil (7) über Antriebsmittel wahlweise in beiden Richtungen antreibbar ist.

## Beschreibung

Die Erfindung betrifft ein Verfahren und eine Vorrichtung zum Verdichten thermoplastischer Kunststoffe nach dem Oberbegriff des Anspruchs 1.

Derartige Verdichter, auch als Kompaktoren, Plastcompactoren oder Agglomeratoren bezeichnet, finden beim Kunststoffrecycling Anwendung. Wichtige Materialen, die mit der Maschine aufgearbeitet werden, sind alle Arten von Folienabfällen aus thermoplastischen Kunststoffen, Schaumstoffe aus Polyethylen oder Polystyrol, Teppichbodenabfälle aus Polyamid oder Polypropylen oder auch Faserabfälle wie z. B. Nonwoven-Material, auch aus Vliesstoff bezeichnet, aus Polyestern, Polypropylen oder Polyamid. Dabei kommt die Technik in erster Linie für die Verarbeitung sauberer und sortenreiner betrieblicher Abfälle in Betracht. In den letzten Jahren wurden die Verdichter auch zunehmend für Abfälle von Endverbrauchern eingesetzt. Das Produkt des Verarbeitungsprozesses wird als Kompaktat oder Agglomerat bezeichnet. Die Verdichtung mittels Verdichtern ist zum Beispiel in der Zeitschrift KUNSTSTOFFE 80 (1990) 4 auf den Seiten 499 bis 501 beschrieben.

Beispielsweise wird bei einem derartigen Verdichter zwischen die beiden etwa scheibenförmigen Arbeitsflächen Kunststoffmaterial gefördert, und durch die Relativbewegung der beiden Arbeitsflächen zueinander wird das Kunststoffmaterial zwischen diesen erwärmt und geknetet, so dass aus dünnwandigem Folienmahlgut, Fasern und Schaumstoff ein kompaktes Material mit hohem Schüttdichte entsteht. Üblicherweise werden eine feststehende, als Stator bezeichnete Arbeitsfläche und eine drehbare, als Rotor bezeichnete Arbeitsfläche verwendet, es sind jedoch auch zwei mit unterschiedlichen Drehzahlen und / oder unterschiedlichen Drehrichtungen laufende Arbeitsflächen denkbar.

Bei den gattungsgemäßen Verdichtern muss der Abstand zwischen den beiden Arbeitsflächen regelmäßig verringert und vergrößert werden, um einen optimalen Betriebspunkt einzustellen. Ein optimaler Betriebspunkt ist durch eine Materialtemperatur unterhalb der Schmelzetemperatur, aber oberhalb der Erweichungstemperatur gegeben. Weitere Größen, die einen optimalen Betriebspunkt kennzeichnen, sind hohes Schüttgewicht des Kompaktates und hoher Durchsatz des Verdichters.

Beispielhaft soll hier auf einen Parameter eingegangen werden, der eine häufige Veränderung des Abstandes zwischen dem Stator und dem Rotor erforderlich macht. Die Temperatur des Kunststoffes zwischen den Arbeitsflächen darf nicht so groß werden, dass der Kunststoff schmelzeflüssig und damit klebrig wird. Der Betriebszustand, dass der Kunststoff klebrig wird, ist unter allen Umständen zu vermeiden. In diesem Fall verklebt der Kunststoff, und es kommt zu Materialanhäufungen nach dem Austritt aus den Arbeitsflächen. Damit ist der notwendige pneumatische Transport des kompaktierten Kunststoffs nicht mehr durchführbar. Ein geeigneter Parameter, um die Kunststofftemperatur zu beeinflussen, ist der Abstand zwischen Stator und Rotor. Bei einem großen Abstand ist die eingebrachte Friktionsenergie geringer als bei einem kleinen Abstand. Bislang ist es nicht gelungen, die Kunststofftemperatur direkt zwischen den beiden Arbeitsflächen zu messen. Deshalb benutzt man zur Regelung des Prozesses eine Hilfstemperatur. Dazu eignet sich Temperatur des Stators, die sich ohne großen Aufwand bestimmen lässt. Die Temperatur des Stators ist ungefähr proportional zur Kunststofftemperatur zwischen den Scheiben. Dank verbesserter Regelungstechnik durch leistungsfähige und preiswerte speicherprogrammierbare Steuerungen regelt man kontinuierlich den Scheibenabstand so ein, dass man eine vorgegebene optimale Materialtemperatur bei größtmöglichem Durchsatz und Schüttgewicht erhält. Dazu wiederum benötigt man auch einen leistungsfähigen, unempfindlichen Verstellmechanismus, der durch diese Erfindung beschrieben ist.

Aus der Praxis ist es insbesondere für den Bereich vergleichsweise kleinerer Verdichter bekannt, die drehangetriebene Arbeitsfläche gemeinsam mit ihrer Antriebswelle axial zu verschieben. Eine derartige Vorrichtung ist z.B. aus der DE-A-1454875 bekannt. Als Nachteilig an der Vorrichtung hat sich der axiale Verstellmechanismus erwiesen, der den Scheibenabstand an den optimalen Betriebspunkt anpasst.

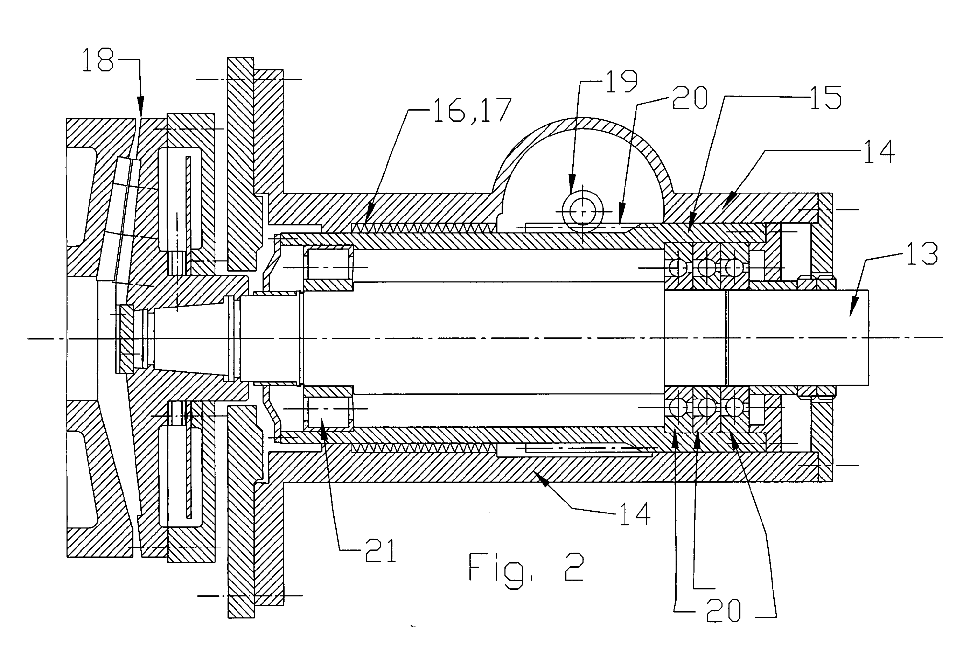

Die Fig. 2 offenbart die Funktionsweise nach dem genannten Stand der Technik. Die Welle 13 ist drehbar in einem grundsätzlich feststehenden Gehäuse 14 gelagert, wobei zwischen der Gehäusewandung und der Welle eine Hülse 15 angeordnet ist. Innerhalb der Hülse dreht sich die Antriebswelle 13 frei. Die Hülse 15 selbst kämmt über ein Außengewinde 16 mit einem Innengewinde des Gehäuses 17.

Eine Verdrehung der Hülse 15 bewirkt daher aufgrund der Gewindesteigung, dass die Hülse innerhalb des Gehäuses 14 axial verschoben wird. Im Gegensatz zur ständig drehenden Welle 13 ist die Hülse 15 also lediglich bedarfsweise drehbar, nämlich zur axialen Verstellbarkeit der Welle 13 und damit der drehbaren Arbeitsfläche 18.

Diese Drehbewegung der Hülse wird über einen Schneckentrieb bewirkt. Dabei ist eine Schnecke 19 tangential zur Hülse 15 angeordnet, wobei die Hülsenaußenseite eine dementsprechende Verzahnung 20 aufweist, mit der die Schnecke 19 kämmt. Die Achsen von Schnecke 19 und Hülse 15 sind um 90° zueinander versetzt. Eine konkave Ausgestaltung der Zähne, um eine möglichst großflächige Anlage an der Schnecke zu ermöglichen, verbietet sich aufgrund der gewünschten axialen Beweglichkeit der Hülse. Dementsprechend findet eine sehr kleinflächige, nahezu punktuelle Kontaktierung zwischen der Schnecke und der auf der Hülsenoberfläche vorgesehenen Verzahnung statt. Dies führt zu einem unerwünscht schnellen Verschleiß der Verzahnung auf der Hülse und metallischem Abrieb. Dieser metallische Abrieb gelangt in die Lagerung 20 und 21 der Welle 13 und führt dort zu Schäden und letztendlich der Zerstörung der Lager 20 und 21 führen. Nachteilig ist zudem die aufwendige und damit teure Fertigung der Hülse 15 und des Gehäuses 14.

Es ist die Aufgabe der vorliegenden Erfindung, einen Verdichter mit einem Verstellmechanismus bereitzustellen, der eine gegenüber dem Stand der Technik wesentlich verbesserte Lösung anbietet und insbesondere möglichst verschleißarm arbeitet, wobei die Komponenten zudem als möglichst standardisierte Zukaufteile preisgünstig am Markt für Maschinenelemente verfügbar sein sollen.

Diese Aufgabe wird durch einen Verdichter mit den Merkmalen des Anspruchs 1 gelöst.

Die Erfindung schlägt mit anderen Worten vor, die Verstellung nach wie vor über eine Axialverschiebung der Hülse zu bewirken: diese erfolgt allerdings nicht über eine Drehbewegung der Hülse, sondern vielmehr ist erfindungsgemäß die Hülse drehfest und lediglich axial verschiebbar gelagert. Gegenüber der gattungsgemäßen Konstruktion vereinfacht sich so die Abdichtung zwischen Welle, Hülse und Gehäuse. Die Verstellung der Hülse erfolgt erfindungsgemäß über eine Gewindeverzahnung, wobei die Hülse an ihrer Außenseite das Außengewinde aufweist und ein äußeres Bauteil an seiner inneren Oberfläche das korrespondierende Innengewinde aufweist. Als "Gewinde" im Sinne des vorliegenden Vorschlags ist eine komplementäre Formgebung bezeichnet, welche in Abhängigkeit von einer Drehbewegung des einen Bauteils eine Axialverschiebung des anderen Bauteils erzeugt. Dieses "Gewinde" kann auch ohne die Ausgestaltung mehrerer Gewindegänge verwirklicht sein, z. B. in Form einer bajonnettverschlußartigen Kulissenführung. Durch Drehung des vorgenannten äußeren Bauteils, welches in axialer Richtung festgesetzt ist, wird die axiale Verstellung der Hülse bewirkt, sodass diese je nach Drehrichtung des äußeren Bauteils wahlweise hin oder her verschoben werden kann. Vorzugsweise kann ein Gehäuse die Welle, die Hülse und auch das drehbare äußere Bauteil schützend umgeben. Eine beispielhafte Ausführung der Erfindung arbeitet mit einer Schnecke und einem Schneckenrad, die einen optimalen weil verschleißarmen Zahneingriff bieten.

Eine erheblich aufwendigere Konstruktion, beispielsweise durch radial äußere Lagerung einer der beiden Arbeitsflächen und durch eine Verstellung dieser Arbeitsfläche kann durch die Verschiebbarkeit per Hülse vermieden werden, sodass insgesamt die Vorteile einer leichten und preisgünstigen Konstruktion verwirklicht werden können.

Vorteilhaft kann das äußere Bauteil als Ring ausgestaltet sein, also als vergleichsweise schmales Bauteil, sodass ein vergleichsweise geringer Bauraum durch diese Anordnung beansprucht wird.

Der Drehantrieb für das äußere Bauteil, beispielsweise für den vorerwähnten Ring, kann an seiner äußeren Umfangsfläche angreifen, beispielsweise durch eine entsprechende Verzahnung an der Außenseite des drehbaren Bauteils, beispielsweise als Schneckentrieb. Da das äußere, beispielsweise ringförmige, Bauteil nicht axial verschoben wird, kann in diesem Fall der Schneckenantrieb mit einer großflächigen Kontaktfläche zwischen Schnecke und Verzahnung ausgebildet sein, beispielsweise mit konkav ausgeformter Verzahnung auf dem drehbaren Bauteil, sodass im Vergleich zu einer gattungsgemäßen Konstruktion eine erheblich geringere Belastung dieses Antriebs bei ansonsten vergleichbaren äußeren Rahmenbedingungen auftritt und dementsprechend die Betriebssicherheit und Lebensdauer der vorschlagsgemäßen Konstruktion verbessert ist. Gegebenenfalls kann anstelle eines Schneckenantriebs jedoch auch ein Zahnradantrieb oder ein Kettenantrieb des äußeren Bauteils vorgesehen sein, sodass je nach Erfordernissen entweder eine besonders preisgünstige, eine besonders kompakte oder eine besonders wartungsarme Konstruktion gewählt werden kann.

Alternativ kann der Antrieb auch stirnseitig an das äußere drehbare Bauteil angreifen, beispielsweise mittels einer Stirnrad- oder einer Kegelradverzahnung. Wenn radial um das drehbare äußere Bauteil herum wenig Platz für Antriebsmittel verfügbar ist, kann über eine derartige stirnseitige Krafteinleitung radialer Bauraum um das drehbare äußere Bauteil eingespart werden.

Die Erfindung wird anhand der rein schematischen Zeichnung näher erläutert. Es zeigt
- Figur 1: ausschnittsweise einen Schnitt durch den Übergangsbereich von Antriebswelle zu drehbarer Arbeitsfläche des Kompaktors gemäß der vorliegenden Erfindung; und
- Figur 2: eine Schemaansicht im Schnitt für einen Verdichter nach dem Stand der Technik.

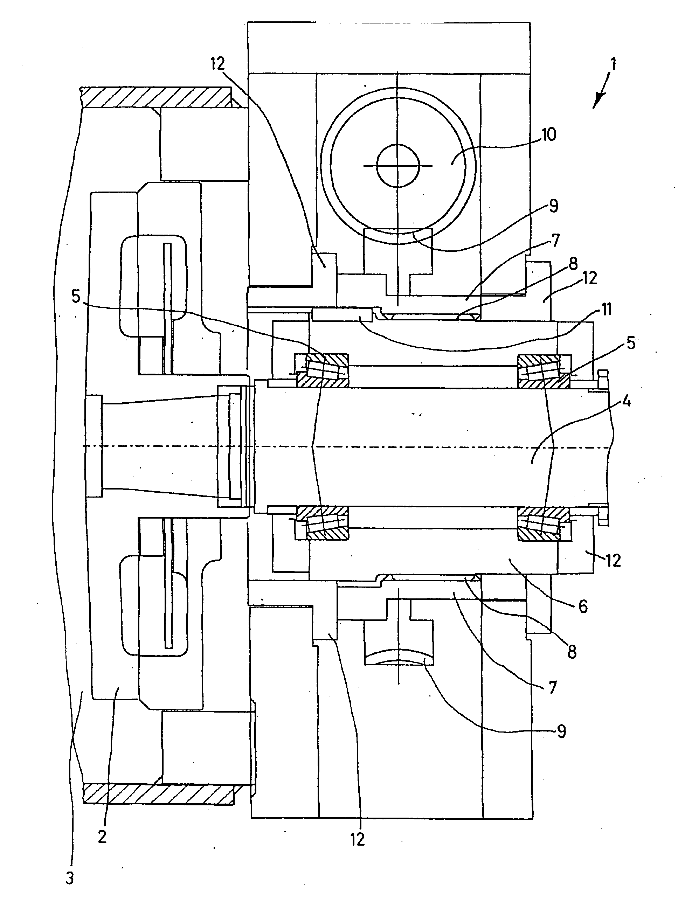

In Figur 1 ist mit 1 allgemein ein Verdichter bezeichnet, der allerdings nur ausschnittsweise dargestellt ist. So ist beispielsweise eine drehbare Arbeitsfläche 2 dargestellt, während der zugehörige Stator nicht dargestellt ist. Die Arbeitsfläche 2 ist innerhalb einer Verdichterkammer 3 angeordnet und wird durch eine Welle 4 drehangetrieben.

Die Welle 4 ist über Kegelrollenlager 5 innerhalb einer Hülse 6 drehbar gelagert. Die Hülse 6 kämmt über ein lediglich angedeutetes Gewinde 8 mit einem drehbaren, ringförmigen äußeren Bauteil 7. Dieses Bauteil 7 ist mit einer konkav ausgeformten Antriebsverzahnung 9 versehen. Über eine Schnecke 10 kann daher das äußere Bauteil 7 in Drehung versetzt werden. Da das äußere Bauteil 7 an seinen beiden axialen Enden festgesetzt und somit in beiden axialen Richtungen verschiebesicher gelagert ist, erfolgt bei der Drehbewegung dieses Bauteils 7 aufgrund der Gewindesteigung des Gewindes 8 eine axiale Verstellung der Hülse 6. Diese ist mittels einer Passfeder 11 drehfest innerhalb eines äußeren Gehäuses 12 gelagert, sodass durch das Gewinde 8 die Drehbewegung des äußeren Bauteils 7 in die Axialbewegung der Hülse 6 umgesetzt wird. Dabei nimmt die Hülse 6 die Welle 4 in axialer Richtung mit, sodass über die Welle 4 auch eine Verstellung der drehbaren Arbeitsfläche 2 in axialer Richtung erfolgt.

Ein besonderer Vorteil dieses Ausführungsbeispiels ist der linienförmige Zahneingriff, den die Schnecke 10 mit der Schneckenradverzahnung 9 bildet. Gegenüber dem theoretisch nur punktförmigen Zahneingriff aus dem Verstellmechanismus aus DE-A-1454875 ist die Auflagenfläche wesentlich größer und damit die Materialbelastung und der metallische Abrieb verringert, was die Lebensdauer der Verzahnung und der Lager und damit der gesamten Getriebekonstruktion wesentlich verlängert.

## Patentansprüche

1. Verdichter zur Aufbereitung von thermoplastischen Kunststoffen zwischen zwei etwa scheibenförmigen Arbeitsflächen, von denen wenigstens eine drehbar ist, mit einer Welle, die drehangetrieben ist und mit der drehbaren Arbeitsfläche verbunden ist, und mit einer die Welle umgebenden Hülse, welche gemeinsam mit der Welle axial verfahrbar ist, wobei die Hülse ein Außengewinde aufweist,
**dadurch gekennzeichnet**
**dass** die Hülse (6) drehfest gelagert ist, und dass die Hülse (6) von einem äußeren, drehbar gelagerten Bauteil (7) umgeben ist, welches mittels eines Innengewindes mit dem Außengewinde der Hülse (6) zusammenwirkt, wobei das äußere Bauteil (7) über Antriebsmittel wahlweise in beiden Richtungen antreibbar ist.

2. Verdichter nach Anspruch 1,
**dadurch gekennzeichnet,**
**dass** das äußere Bauteil (7) als Ring ausgestaltet ist.

3. Verdichter nach Anspruch 1 oder 2,
**dadurch gekennzeichnet,**
**dass** das äußere Bauteil (7) an seiner äußeren Umfangsfläche zum Anschluss an die Antriebsmittel ausgestaltet ist, wie durch eine Verzahnung (9) für einen Schnecken-, Zahnrad- oder Kettentrieb.

4. Verdichter nach Anspruch 1 oder 2,
**dadurch gekennzeichnet,**
**dass** das äußere Bauteil (7) an einer axialen Stirnfläche zum Anschluss an die Antriebsmittel ausgestaltet ist, wie durch eine Verzahnung für Stirn- oder Kegelzahnradtriebe.
